# EUROPÄISCHE PATENTSCHRIFT

(11) **EP 3 872 241 B1**
(45) Veröffentlichungstag und Bekanntmachung des Hinweises auf die Patenterteilung: **07.05.2025**
(21) Anmeldenummer: 21158561.7
(22) Anmeldetag: 23.02.2021
(51) Int. Cl.: F16H 57/029, F16H 57/031

(54) **ANTRIEBSEINRICHTUNG MIT EINEM SCHUTZRING**
DRIVE DEVICE WITH A PROTECTIVE RING
DISPOSITIF D'ENTRAÎNEMENT DOTÉ D'UN ANNEAU DE PROTECTION

(30) Priorität: 25.02.2020 DE 102020104883
(43) Veröffentlichungstag der Anmeldung: 01.09.2021
(73) Patentinhaber: Saurer Spinning Solutions GmbH & Co. KG, 52531 Übach-Palenberg (DE)
(72) Erfinder: Stitz, Albert, 51515 Kürten (DE)
(74) Vertreter: Schniedermeyer, Markus

(56) Entgegenhaltungen:
- CN-A- 106 523 712
- DE-A1- 102018 102 232
- DE-A1- 102018 119 124

## Beschreibung

Die Erfindung betrifft eine Antriebseinrichtung für eine Spinnmaschine mit einer motorischen Antriebseinheit und wenigstens einer Getriebeeinheit, wobei die Antriebseinheit und/oder die Getriebeeinheit mit einem weiteren Bauteil, insbesondere mit einer weiteren Getriebeeinheit, mittels einer Welle verbunden ist.

Spinnmaschinen und insbesondere Ringspannmaschinen weisen häufig zahlreiche, zueinander identische und aneinander angeordnete Arbeitsstellen mit je einer Spinneinheit auf, wobei die Spinneinheiten und/oder mit den Spinneinheiten verbundene oder vor- bzw. nachgelagerte Bauteile häufig über eine gemeinsame Antriebseinrichtung der Spinnmaschine angetrieben werden. Ein solcher Antrieb ist häufig mit dem anzutreibenden Bauteil, beispielsweise einer Walze eines vor der Spinneinheit angeordneten Streckwerks, oder mit einer Getriebeeinheit über eine Welle verbunden. Bei dem Antrieb kann es sich dabei grundsätzlich um einen Hauptantrieb an einem Ende einer solchen Welle handeln. Bei besonders langen Wellen sind zumeist entlang des Verlaufes der Welle zudem mehrere Hilfsantriebseinheiten angeordnet, wobei jede Hilfsantriebseinheit besonders bevorzugt über wenigstens ein Hauptgetriebe sowie insbesondere bevorzugt zudem noch über ein nachgeordnetes Verteilergetriebe mit der Welle der Spinnmaschine bzw. des daran angeordneten Bauteils verbunden ist.

Dabei besteht jedoch das Problem, dass während des Spinnvorgangs zahlreiche einzelne Fasern und Faserpartikel sowie zusätzlich auch lose Fadenenden entstehen, die in einen Verbindungsbereich zwischen einer Antriebseinheit und einer Welle gelangen können und sich dort ansammeln. Langfristig führt dies zu einer Störung der Funktion der Antriebseinheit und des damit verbundenen Bauteils, wodurch die gesamte Spinnmaschine mit allen Spinneinheiten angehalten und die betroffene Verbindung gereinigt oder sogar Bauteile ausgetauscht werden müssen.

Aus der Druckschrift DE 10 2018 102 232 A1 ist bereits eine doppelseitige Ringspinnmaschine mit Streckwerken auf jeder Maschinenseite bekannt, die mehrere in Laufrichtung eines Faserbandes hintereinander angeordnete, mit unterschiedlichen Drehzahlen rotierende Streckwerksunterwalzen aufweisen, welche durch maschinenendseitig angeordnete Antriebseinrichtungen sowie wenigstens eine zusätzliche Hilfsantriebseinrichtung beaufschlagbar sind, wobei auf jeder Maschinenseite mehrere Arbeitsstellen nebeneinander angeordnet sind und wobei die Streckwerke jeweils Teil einer Arbeitsstelle sind. Die Hilfsantriebseinrichtung weist einen elektromotorischen Antrieb, ein Hauptgetriebe und zwei Verteilergetriebe auf, wobei diese Bauteile jeweils über eine Welle mit einem Kreuzgelenk miteinander verbunden sind. Zum Schutz kann diese Welle zwischen den Bauteilen vollständig innerhalb eines Gehäuses angeordnet sein. Dies führt dazu, dass die Welle, insbesondere in einem Verbindungsbereich, vor einer Verschmutzung geschützt ist. In vielen Fällen ist die Anordnung der Welle innerhalb eines geschlossenen Gehäuses auch eine gute Lösung, jedoch wird teils auch eine offene Führung der Wellen gewünscht, was zum einen eine besonders leichte Kontrolle und Wartung sowie einen einfachen Austausch von Bauteilen ermöglicht und zum anderen einen flexibleren Aufbau sowie eine günstigere Herstellung möglich macht.

Der Erfindung liegt daher die Aufgabe zugrunde, eine Antriebseinrichtung für eine Spinnmaschine zu schaffen, die eine besonders leichte Kontrolle und Wartung sowie einen einfachen Austausch von Bauteilen einer Welle der Spinnmaschine ermöglichen und insbesondere trotz einer gehäuselosen Ausführung der Welle ein Verschmutzen, insbesondere der Lagerung der Welle und/oder der Antriebseinrichtung, durch Fasern, Faserpartikel und Fäden wirkungsvoll verhindern.

Die Aufgabe wird erfindungsgemäß durch eine Antriebseinrichtung gemäß Anspruch 1 gelöst. Vorteilhafte Weiterbildungen der Erfindung sind in den abhängigen Ansprüchen angegeben.

Die erfindungsgemäße Antriebseinrichtung für eine Spinnmaschine, insbesondere für ein Streckwerk einer Spinnmaschine und dabei besonders bevorzugt einer Ringspinnmaschine, weist eine motorische Antriebseinheit und bevorzugt auch wenigstens eine Getriebeeinheit auf, wobei die Antriebseinheit und/oder die Getriebeeinheit mit einem weiteren Bauteil, insbesondere mit einer weiteren Getriebeeinheit, mittels einer Welle verbunden ist und wobei ein Schutzring zum Schutz eines Verbindungsbereichs zwischen der Welle und der Antriebseinheit und/oder der Getriebeeinheit, insbesondere einem Gehäusebauteil der Antriebseinheit und/oder der Getriebeeinheit, gegen Fadenwickel oder Verschmutzung verdrehfest an der Welle angeordnet ist. Der Schutzring zum Schutz des Verbindungsbereichs zwischen der Welle und einem Gehäusebauteil der Antriebseinheit und/oder der Getriebeeinheit gegen Fadenwickel oder Verschmutzung weist einen zylindrischen Grundkörper zum drehfesten Anordnen des Schutzrings auf der Welle und einen an den zylindrischen Grundkörper angrenzenden konischen Endabschnitt zur Abdeckung des Verbindungsbereichs sowie zum Wegleiten von Schmutzpartikeln und Fäden aus dem Verbindungsbereich auf. Dabei erfolgt die Abdeckung insbesondere bevorzugt spaltfrei.

Der Schutzring der erfindungsgenmäßen Antriebseinrichtung führt zu dem Vorteil, dass die Welle im Wesentlichen nach wie vor frei zugänglich ist und somit leicht zu warten, zu schmieren und ggf. auszutauschen ist, wobei jedoch in dem Verbindungsbereich zwischen der Welle und dem Gehäusebauteil ein Schutz gegen Verschmutzen durch Fasern, Faserpartikel und Fäden erreicht wird, sodass die Vorrichtung und insbesondere eine Spinnmaschine lange unterbrechungsfrei und ohne eine häufige Wartung und Reinigung in diesem Bereich betrieben werden kann. Zudem ist der Schutzring kostengünstig herzustellen und leicht zu montieren, sodass eine besonders günstige Herstellung erreicht werden kann.

Bei der Spinnmaschine kann es sich grundsätzlich um eine beliebige Maschine zum Herstellen und/oder zum Verarbeiten von Textilfasern oder eines Fadens aus Textilfasern handeln. Bevorzugt ist die Spinnmaschine eine Ringspinnmaschine und besonders bevorzugt ist dieerfindungsgemäße Antriebseinrichtung an der Spinnmaschine oder einem Bauteil einer Spinnmaschine, wie einem Streckwerk oder einer Spulvorrichtung, angeordnet. Die Spinnmaschine weist dabei bevorzugt mehrere Arbeitsstellen mit jeweils einer Spinneinheit auf, wobei jede Arbeitsstelle besonders bevorzugt ein eigenes Streckwerk aufweist bzw. jeder Spinneinheit jeweils ein Streckwerk vorgelagert ist.

Die Antriebseinrichtung ist grundsätzlich zum Antrieb wenigstens eines Bauteils der Spinnmaschine und bevorzugt mehrerer Bauteile einer Spinnmaschine über eine gemeinsame Welle vorgesehen. Ganz besonders bevorzugt treibt die Antriebseinrichtung über eine Welle ein an jeder Arbeitsstelle der Spinnmaschine angeordnetes Bauteil an. Dabei kann es sich bei der Antriebseinrichtung sowohl um eine Hauptantriebseinrichtung handeln, die bevorzugt eine an einem Ende der anzutreibenden Welle angeordnete Antriebseinheit aufweist. Alternativ kann die Antriebseinrichtung auch eine Hilfsantriebseinrichtung, bevorzugt für wenigstens eine Streckwerkswalze, insbesondere eine Streckwerksunterwalze, einer Spinnmaschine sein, die ergänzend zu einer Hauptantriebseinrichtung entlang des Verlaufes der Welle, insbesondere in einem mittleren Bereich einer Welle angeordnet ist. Dabei ist eine Hilfsantriebseinrichtung besonders bevorzugt dazu vorgesehen, die Hauptantriebseinrichtung zu unterstützen und/oder ein Verwinden einer sehr langen Welle zu verhindern.

Die Antriebseinrichtung weist bevorzugt ein Hauptgetriebe und besonders bevorzugt weiterhin wenigstens ein Verteilergetriebe auf. Ganz besonders bevorzugt umfasst die Antriebseinrichtung aber je ein Verteilergetriebe für jede Seite einer doppelseitigen Spinnmaschine. Insbesondere bevorzugt ist eine Gestaltung der Antriebseinrichtung mit einem Hauptgetriebe und genau zwei Verteilergetrieben, die weiterhin bevorzugt in unmittelbarer Nähe zueinander angeordnet sind. Entsprechend kann die Getriebeeinheit ein Hauptgetriebe oder ein Verteilergetriebe sein.

Die Antriebseinheit der Antriebseinrichtung ist zunächst eine Vorrichtung, die einen rotierenden Antrieb bereitstellt, wobei als Antriebseinheit ein Elektromotor bevorzugt wird. Besonders bevorzugt ist die Antriebseinheit dabei zum unmittelbaren Antrieb einer Welle und/oder eines Bauteils der Spinnmaschine mittels einer Welle vorgesehen. Zum Übertragen der Drehung auf die Welle weist die Antriebseinheit eine Ausgangswelle, eine Ausgangsbuchse oder eine anderweitige Möglichkeit zur verdrehfesten Festlegung einer Welle auf. Die Antriebseinheit ist bevorzugt mit wenigstens einer Getriebeeinheit verbunden. Alternativ oder zusätzlich können auch zwei Getriebeeinheiten einer Antriebsvorrichtung miteinander mittels einer Welle verbunden sein, wobei die erste Getriebeeinheit bevorzugt ein Hauptgetriebe ist und die mit der ersten Getriebeeinheit über eine Welle verbundene zweite Getriebeeinheit besonders bevorzugt ein Verteilergetriebe ist.

Bei der Welle kann es sich grundsätzlich zunächst um ein beliebiges Bauteil oder eine beliebige Baugruppe zum Übertragen einer Rotation einer Antriebseinheit oder einer Getriebeeinheit auf ein weiteres Bauteil der Spinnmaschine handeln. Die Welle der Spinnmaschine und insbesondere zum Verbinden der Antriebseinheit und/oder der Getriebeeinheit ist bevorzugt ein winkelbewegliches Kupplungselement bzw. weist eine solche Kupplung auf. Besonders bevorzugt ist die Welle eine Kardanwelle und/oder weist wenigstens ein Kreuzgelenk und/oder ein Gleichlaufgelenk auf.

Der Schutzring ist grundsätzlich ein Bauteil, das zum Schutz eines Verbindungsbereichs zwischen einer Welle und einem Gehäusebauteil einer Spinnmaschine vorgesehen ist. Das Gehäusebauteil kann dabei Teil einer beliebigen, nicht mit der Welle mitrotierenden Baueinheit der Spinnmaschine sein und ist bevorzugt Teil eines Gehäuses der Antriebseinheit und/oder einer Getriebeeinheit. Entsprechend ist das Gehäusebauteil bevorzugt ein Antriebs-, Lager- oder Getriebegehäuse. Weiterhin weist das Gehäusebauteil bevorzugt im Bereich der Welle bzw. einem zum Verbinden mit der Welle und/oder der Aufnahme der Welle vorgesehenen Bereich eine ebene Oberfläche auf, an der der konische Endabschnitt des Schutzrings anliegend und insbesondere mitschleifend angeordnet werden kann. Eine bevorzugte mitschleifende Anordnung des konischen Endabschnitts an dem Gehäusebauteil der Spinnmaschine ist insbesondere dann unproblematisch, wenn die Drehzahl gering ist, wie es beispielsweise bei dem Antrieb für Streckwerkszylinder und -walzen einer Spinnmaschine, insbesondere einer Ringspinnmaschine, der Fall ist, wo die Drehzahl insbesondere bevorzugt unter 20 Umdrehungen pro Minute liegt.

Der Verbindungsbereich ist grundsätzlich der an eine Antriebs- und/oder Getriebeeinheit angrenzende Bereich, in dem zumindest abschnittsweise eine mit der Antriebs- und/oder Getriebeeinheit zusammenwirkende Welle, insbesondere ein Ende einer solchen Welle, angeordnet ist. Dabei erstreckt sich der Verbindungsbereich ebenfalls bevorzugt unmittelbar zwischen der Oberfläche eines Gehäusebauteils, die sich bevorzugt rechtwinklig zu einer Mittellängsachse der Welle erstreckt, und der Oberfläche der Welle. Besonders bevorzugt deckt der Schutzring und insbesondere der konische Endabschnitt im geschützten Verbindungsbereich wenigstens ein Lagerelement, insbesondere ein Getriebelager, und/oder wenigstens eine Wellendichtung ab.

Der Schutzring ist grundsätzlich derart angeordnet und/oder gebildet, dass mittels des Schutzrings der Verbindungsbereich zwischen der Welle und dem Gehäusebauteil vor einer Verschmutzung durch Fasern, Faserpartikel, Staubpartikel und Fäden geschützt ist und/oder von außen an den Verbindungsbereich gelangende Verschmutzungen, insbesondere Fäden nicht in den Verbindungsbereich gelangen können. Bevorzugt werden die außen an den Verbindungsbereich gelangenden Verschmutzungen dabei von dem Verbindungsbereich weggeleitet. Besonders bevorzugt ist der Schutzring zur Anordnung an einer Kardanwelle gebildet, die insbesondere bevorzugt an einer Getriebeausgangswelle angeordnet ist.

Der Schutzring kann grundsätzlich aus einem beliebigen Material gebildet sein, wobei bevorzugt zumindest Teile des Schutzrings, insbesondere der Grundkörper, und besonders bevorzugt der gesamte Schutzring aus einem Kunststoff, bevorzugt aus einem thermoplastischen Kunststoff und besonders bevorzugt aus Polyoxymethylene (POM) gebildet ist.

Zum verdrehfesten Anordnen des Schutzrings auf der Welle weist der Schutzring einen zylindrischen Grundkörper auf. Dabei hat der zylindrische Grundkörper bevorzugt über die gesamte Länge entlang seiner Mittellängsachse einen gleichbleibenden Innen- und/oder Außendurchmesser. Weiterhin bevorzugt weist der zylindrische Grundkörper eine über den gesamten Umfang geschlossene Wand auf. Dabei kann die Innenwandung des zylindrischen Grundkörpers einen vollständig runden Querschnitt aufweisen oder aber an die Form der Welle angepasst sein. Besonders bevorzugt erstreckt sich der zylindrische Grundkörper über die gesamte Länge des Schutzrings bis hin zum konischen Endabschnitt und ganz besonders bevorzugt ist der Schutzring ausschließlich aus dem zylindrischen Grundkörper sowie dem konischen Endabschnitt gebildet. Entsprechend bildet der zylindrische Grundkörper bevorzugt die eine Seite bzw. das eine Ende des Schutzrings und der konische Endabschnitt die andere Seite bzw. das andere Ende des Schutzrings. Ebenso bevorzugt weist der zylindrische Grundkörper ein zylindrisches Ende auf, insbesondere an einem dem konischen Endabschnitt gegenüberliegenden Ende des Grundkörpers, wobei besonders bevorzugt das zylindrische Ende einen mit dem übrigen zylindrischen Grundkörper identischen Innen- und/oder Außendurchmesser hat.

Zum Abdecken des Verbindungsbereichs sowie zum Wegleiten von Schmutzpartikeln und Fäden aus dem Verbindungsbereich weist der Schutzring einen konischen Endabschnitt auf. Dabei weist der konische Endabschnitt bevorzugt einen sich zur Außenseite hin und/oder von dem zylindrischen Grundkörper weg aufweitenden bzw. zunehmenden Durchmesser auf. Dabei kann der konische Endabschnitt sowohl mit einer über den gesamten konischen Bereich konstanten Wandstärke, als auch mit einer sich zum Ende hin oder kontinuierlich über den gesamten konischen Bereich verringernden Wandstärke gebildet sein. Weiterhin bevorzugt weist wenigstens die Oberfläche der Außenseite und besonders bevorzugt auch der Innenseite im konischen Endabschnitt eine konische Form auf. Besonders bevorzugt weist der Schutzring am äußersten Bereich bzw. an dem den konischen Endabschnitt aufweisenden Ende seinen größten Innen- und/oder Außendurchmesser auf. Der konische Endabschnitt kann dabei Teil eines separaten, am zylindrischen Grundkörper festgelegten Bauteils oder sogar einer entsprechenden Baugruppe sein, wobei der konische Endabschnitt jedoch bevorzugt mit dem zylindrischen Grundkörper einstückig gebildet oder zumindest stoffschlüssig mit dem Grundkörper verbunden ist.

Bei einer bevorzugten Ausgestaltung des Schutzrings weist der konische Endabschnitt am äußeren Ende des Schutzrings eine Anlagefläche auf, die bevorzugt rechtwinklig zur Mittellängsachse des zylindrischen Grundkörpers bzw. des gesamten Schutzrings und/oder rechtwinklig zu einer Rotationsachse der Welle angeordnet ist, um den Schutzring am Gehäusebauteil mitschleifend und zugleich den Verbindungsbereich spaltfrei abdeckend anordnen zu können, wodurch eine besonders gute und vollständige Abdeckung des Verbindungsbereichs und ein entsprechend umfangreicher Schutz erreicht wird. Bevorzugt ist der Verbindungsbereich durch den Schutzring sowie das Gehäusebauteil vollständig geschlossen. Generell ist bevorzugt, dass der Schutzring einerseits verdrehfest an der Welle angeordnet ist und andererseits mitschleifend an dem Gehäusebauteil angeordnet ist.

Eine weitere bevorzugte Ausgestaltung des Schutzrings sieht vor, dass die Länge des konischen Endabschnitts zwischen 1 % und 75 %, bevorzugt zwischen 2 % und 50 %, besonders bevorzugt zwischen 3 % und 20 % und ganz besonders bevorzugt zwischen 5 % und 15 % der Länge des Schutzrings beträgt, wodurch einerseits ein guter Halt des Schutzrings auf der Welle erreicht wird und andererseits eine ausreichend starke Ableitung von Schmutzpartikeln und Fäden aus dem unmittelbar an das Gehäusebauteil angrenzenden Bereich der Welle erfolgt. Dabei hängt die Länge des konischen Endabschnitts bevorzugt auch von den darunter abzudeckenden Bauteilen ab, wobei besonders bevorzugt sämtliche Bauteile zum Anschluss und/oder zur Festlegung der Welle innerhalb des konischen Endabschnitts angeordnet sind. Die Länge des Schutzrings ist dabei insbesondere die Richtung entlang der Mittellängsachse des Schutzrings und/oder des zylindrischen Grundkörpers.

Um Fäden und andere Verschmutzungen besonders effektiv von dem Verbindungsbereich abzuleiten und ein Bilden eines Fadenwickels um die äußere Oberfläche des Schutzrings zu verhindern, weist der konische Endabschnitt einer bevorzugten Ausführung des Schutzrings eine konische Außenfläche mit einer glatten, geraden und/oder gegenüber einer Rotationsachse des auf einer Welle angeordneten Schutzrings bzw. gegenüber einer Mittellängsachse des Schutzrings verwinkelten Oberfläche, insbesondere in Bezug zur Mittellängsachse des Schutzrings und/oder der Welle, auf. Dabei ist die konische Außenfläche insbesondere vorgesehen, einen sich um den Endbereich der Welle legenden Fadenwickel von einem Lager- oder Getriebegehäuse wegzuführen. Besonders bevorzugt ist die gesamte Oberfläche des Schutzrings glatt, gerade und/oder kantenfrei gebildet, wobei der Grundkörper einzig zwischen dem konischen Endabschnitt und dem zylindrischen Grundkörper einen gewinkelten Bereich aufweisen kann.

Die konische Außenfläche des Schutzrings kann zunächst einen beliebig gekrümmten und/oder verwinkelten Verlauf aufweisen, wobei der Winkel jedoch bevorzugt über den gesamten konischen Endabschnitt und insbesondere über die gesamte konische Außenfläche gleichbleibend bzw. konstant ist. Besonders bevorzugt beträgt der Winkel des konischen Endabschnitts und insbesondere der konischen Außenfläche zur Mittellängsachse des Schutzrings, des zylindrischen Grundkörpers und/oder der Welle zwischen 20° und 85°, bevorzugt zwischen 40° und 75° und besonders bevorzugt zwischen 45° und 65°, sodass auf Partikel, die an die konische Außenfläche gelangen, eine ausreichend große Kraft in Richtung des zylindrischen Grundkörpers und somit weg vom Verbindungsbereich wirkt.

Nach einer vorteilhaften Weiterbildung des Schutzrings der erfindungsgemäßen Antriebseinrichtung ist der Außendurchmesser und insbesondere der maximale Außendurchmesser des konischen Endabschnitts zwischen 5 % und 100 %, bevorzugt zwischen 10 % und 75 % und besonders bevorzugt zwischen 20 % und 50 % größer als der Außendurchmesser des zylindrischen Grundkörpers, wodurch ebenfalls ein sicheres Abgleiten von Fäden und Verschmutzungen an dem konischen Endabschnitt gewährleistet wird. Weiterhin entspricht der Außendurchmesser des konischen Endabschnitts in dem an den Grundkörper angrenzenden Abschnitt besonders bevorzugt dem Außendurchmesser des Grundkörpers, sodass ein stufenfreier Übergang der beiden Bereiche erreicht wird. Der maximale Außendurchmesser des konischen Endabschnitts befindet sich dabei bevorzugt im Bereich der Anlagefläche.

Um eine besonders einfache und stabile verdrehfeste Anordnung des Schutzrings auf der Welle zu erreichen, ist bevorzugt der Grundkörper und besonders bevorzugt der gesamte Schutzring einstückig und/oder rotationssymmetrisch, insbesondere zu der Mittellängsachse des Schutzrings und/oder zu der Rotationsachse der Welle, gebildet. Dies ermöglicht zudem eine besonders einfache und kostengünstige Herstellung des Schutzrings.

Obwohl grundsätzlich eine beliebige Festlegung des Schutzrings an der Welle möglich ist, sieht eine bevorzugte Ausgestaltung vor, dass der Grundkörper des Schutzrings zur verdrehfesten Festlegung auf der Welle durch eine Presspassung vorgesehen und/oder gebildet ist, wozu der Grundkörper bevorzugt eine vollständig zylindrische Form und/oder einen über die gesamte Länge gleichbleibenden Innendurchmesser aufweist, der besonders bevorzugt kleiner ist als der Außendurchmesser der Welle. Bevorzugt ist der Innendurchmesser dabei zwischen 0,01 % und 5 %, besonders bevorzugt zwischen 0,05 % und 3 % und ganz besonders bevorzugt zwischen 0,1 % und 2 % kleiner als der Außendurchmesser der Welle, auf der der Schutzring verdrehfest festgelegt werden soll. Grundsätzlich ist bevorzugt, dass der Schutzring auf der Welle kraftschlüssig verdrehfest festgelegt wird. Alternativ kann der Innendurchmesser ggf. mit einer Toleranz auch dem Außendurchmesser der Welle entsprechen, sodass die verdrehfeste Festlegung dann in anderer Weise, beispielsweise form- und/oder stoffschlüssig erfolgen muss.

Um eine stabile Festlegung des Schutzrings auf der Welle, insbesondere durch eine Presspassung, zu erreichen, ist die Wandstärke des Schutzrings wenigstens im Bereich des zylindrischen Grundkörpers, bevorzugt des gesamten Schutzrings gleichbleibend. Weiterhin bevorzugt beträgt die Wandstärke des Schutzrings wenigstens im Bereich des zylindrischen Grundkörpers, bevorzugt des gesamten Schutzrings zwischen 0,5 mm und 5 mm, besonders bevorzugt zwischen 1 mm und 3 mm und ganz besonders bevorzugt zwischen 1,5 mm und 2,5 mm, wodurch eine ausreichend hohe Stabilität und Spannkraft erreicht werden kann.

Ein Ausführungsbeispiel einer erfindungsgemäßen Antriebseinrichtung wird nachstehend mit Bezug auf eine Zeichnung näher erläutert. In der Figur zeigt:

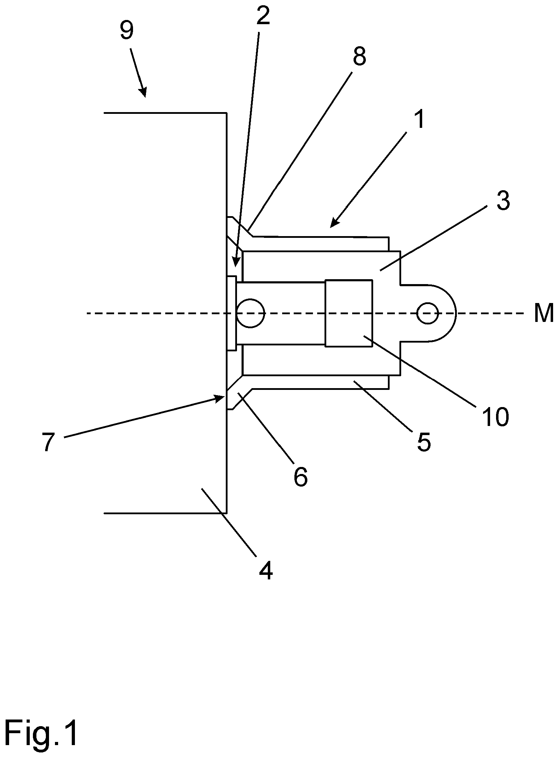

- Fig. 1: eine schematische Ansicht eines in einem Verbindungsbereich zwischen einer Welle und einem Gehäusebauteil angeordneten Schutzrings.

Ein in Figur 1 schematisch dargestellter Schutzring 1 ist auf einem Ende einer Kardanwelle 3 angeordnet, um einen Verbindungsbereich 2 zwischen der Kardanwelle 3 und einem Motorgehäuse 4 vor Verschmutzung zu schützen. Die Kardanwelle 3 ist dabei ein Teil einer Ringspinnmaschine und genauer ein Teil einer Hilfsantriebseinrichtung für ein Streckwerk einer solchen Ringspinnmaschine. Dabei sind an der Ringspinnmaschine zahlreiche zueinander identische Arbeitsstellen nebeneinander angeordnet, die jeweils ein Streckwerk mit mehreren Streckwerkswalzen und nachfolgend eine Spinnvorrichtung aufweisen. Alle Streckwerkswalzen werden mittels einer gemeinsamen Welle angetrieben, die mit einer Hauptantriebseinrichtung sowie mindestens einer Hilfsantriebseinrichtung verbunden ist. Jede Hilfsantriebseinrichtung weist dabei einen Elektromotor als Teil einer Antriebseinheit 9 sowie ein Hauptgetriebe und zwei Verteilergetriebe auf, wobei die Antriebseinheit 9 mit dem Hauptgetriebe und das Hauptgetriebe mit jedem der Verteilergetriebe jeweils über eine Kardanwelle 3 verbunden ist. Die Antriebseinheit 9 ist dabei innerhalb eines Motorgehäuses 4 angeordnet.

Der Schutzring 1 ist dazu vorgesehen, ein Eindringen von Faserpartikeln und Fäden in den Verbindungsbereich 2 zu verhindern, sodass es zu keiner Verschmutzung der darin angeordneten Lagerung einer Motorausgangswelle 10 kommt. Dazu ist der Schutzring 1 verdrehsicher an einem Ende der Kardanwelle 3 im Bereich der Ausgangswelle 10 der Antriebseinheit 9 festgelegt. Die Festlegung des Schutzrings 1 an der Kardanwelle 3 erfolgt über einen zylindrischen Grundkörper 5 des Schutzrings 1.

Um den Verbindungsbereich 2 schützen zu können, weist der Schutzring 1 einen an den zylindrischen Grundkörper 5 angrenzenden konischen Endabschnitt 6 auf, in dem sich der Innen- und Außendurchmesser des Schutzrings 1 gleichmäßig aufweitet. An der Außenseite weist der konische Endabschnitt 6 eine konische Außenfläche 8 mit einer glatten Oberfläche auf, um in den Bereich der konischen Außenfläche 8 gelangende Fäden von dem Verbindungsbereich 2 abgleiten zu lassen und dadurch ein Bilden eines Fadenwickels zu verhindern.

Um eine möglichst dichte Verbindung zwischen dem mit der Kardanwelle 3 gemeinsam rotierenden Schutzring 1 und der anliegenden Oberfläche des Motorgehäuses 4 zu erreichen, weist der Schutzring 1 am Ende des konischen Endabschnitts 6 eine Anlagefläche 7 auf, die rechtwinklig zu der Mittellängsachse M der Kardanwelle 3 bzw. des Schutzrings 1 sowie parallel zur Oberfläche des Motorgehäuses 4 ausgerichtet ist, sodass der Schutzring 1 mit der Anlagefläche 7 am Motorgehäuse 4 mitschleifend geführt werden kann. Somit wird eine spaltfreie Abdeckung erreicht. Aufgrund der niedrigen Drehzahl der Kardanwelle 3 von unter 20 Umdrehung pro Minute ist dabei auch kein starker Verschleiß des Schutzrings 1 zu befürchten.

Um den Schutzring 1 besonders einfach und kostengünstig herstellen zu können, ist dieser einstückig aus Polyoxymethylene gebildet. Dabei weist der Schutzring 1 eine rotationssymmetrische Form sowie eine geschlossene Oberfläche und eine gleichbleibende Wandstärke auf.

### Bezugszeichenliste

- 1: Schutzring
- 2: Verbindungsbereich
- 3: Welle
- 4: Gehäusebauteil
- 5: zylindrischer Grundkörper
- 6: konischer Endabschnitt
- 7: Anlagefläche
- 8: konische Außenfläche
- 9: motorische Antriebseinheit
- 10: Ausgangswelle
- M: Mittellängsachse

## Patentansprüche

1. Antriebseinrichtung für eine Spinnmaschine, mit einer motorischen Antriebseinheit (9) und wenigstens einer Getriebeeinheit, wobei die Antriebseinheit (9) und/oder die Getriebeeinheit mit einem weiteren Bauteil, insbesondere mit einer weiteren Getriebeeinheit, mittels einer Welle (3) verbunden ist,
**dadurch gekennzeichnet, dass**
ein Schutzring (1) zum Schutz eines Verbindungsbereichs (2) zwischen der Welle (3) und einem Gehäusebauteil (4) der Antriebseinheit (9) und/oder der Getriebeeinheit gegen Fadenwickel oder Verschmutzung verdrehfest an der Welle (3) angeordnet ist, wobei der Schutzring (1) einen zylindrischen Grundkörper (5) zum drehfesten Anordnen des Schutzrings (1) auf der Welle (3) und einen an den zylindrischen Grundkörper (5) angrenzenden konischen Endabschnitt (6) zum Abdecken des Verbindungsbereichs (2) sowie zum Wegleiten von Schmutzpartikeln und Fäden aus dem Verbindungsbereich (2) umfasst, wobei das Gehäusebauteil (4) im Bereich der Welle (3) bzw. einem zum Verbinden mit der Welle (3) und/oder einer Aufnahme der Welle (3) vorgesehenen Bereich eine ebene Oberfläche aufweist, an der der konische Endabschnitt (6) des Schutzrings anliegend und mitschleifend angeordnet ist.

2. Antriebseinrichtung für eine Spinnmaschine nach Anspruch 1, **dadurch gekennzeichnet, dass** der zylindrische Grundkörper (5) des Schutzrings (1) zur verdrehfesten Festlegung auf der Welle (3) durch eine Presspassung vorgesehen ist, wozu der zylindrische Grundkörper (5) einen über seine gesamte Länge gleichbleibenden Innendurchmesser aufweist, der kleiner ist als der Außendurchmesser der Welle (3).

3. Antriebseinrichtung für eine Spinnmaschine nach Anspruch 1 oder 2, **dadurch gekennzeichnet, dass** der konische Endabschnitt (6) am äußeren Ende des Schutzrings (1) eine Anlagefläche (7) aufweist, die rechtwinklig zur Mittellängsachse (M) des zylindrischen Grundkörpers (5) angeordnet ist, wobei der Schutzring (1) am Gehäusebauteil (4) mitschleifend und zugleich den Verbindungsbereich (2) abdeckend angeordnet.

4. Antriebseinrichtung für eine Spinnmaschine nach wenigstens einem der vorhergehenden Ansprüche, **dadurch gekennzeichnet, dass** die Länge des konischen Endabschnitts (6) zwischen 3 % und 20 % der Länge des Schutzrings (1) beträgt.

5. Antriebseinrichtung für eine Spinnmaschine nach wenigstens einem der vorhergehenden Ansprüche, **dadurch gekennzeichnet, dass** der konische Endabschnitt (6) eine konische Außenfläche (8) mit einer glatten, geraden und/oder gegenüber einer Mittellängsachse des Schutzrings (1) verwinkelten Oberfläche aufweist, um einen Faden im Verbindungsbereich (2) vom Gehäusebauteil (4) wegzuführen.

6. Antriebseinrichtung für eine Spinnmaschine nach wenigstens einem der vorhergehenden Ansprüche, **dadurch gekennzeichnet, dass** der Winkel des konischen Endabschnitts (6) und insbesondere der konischen Außenfläche (8) zur Mittellängsachse (M) des zylindrischen Grundkörpers (5) zwischen 45° und 65° beträgt.

7. Antriebseinrichtung für eine Spinnmaschine nach wenigstens einem der vorhergehenden Ansprüche, **dadurch gekennzeichnet, dass** der maximale Außendurchmesser des konischen Endabschnitts (6) zwischen 20 % und 50 % größer ist als der Außendurchmesser des zylindrischen Grundkörpers (5).

8. Antriebseinrichtung für eine Spinnmaschine nach wenigstens einem der vorhergehenden Ansprüche, **dadurch gekennzeichnet, dass** der zylindrische Grundkörper (5) und bevorzugt der gesamte Schutzring (1) einstückig und rotationssymmetrisch gebildet ist.

9. Antriebseinrichtung für eine Spinnmaschine nach wenigstens einem der vorhergehenden Ansprüche, **dadurch gekennzeichnet, dass** die Wandstärke des Schutzrings (1) wenigstens im Bereich des zylindrischen Grundkörpers (5) konstant ist und zwischen 1 mm und 3 mm beträgt.

## Claims

1. Drive device for a spinning machine, comprising a motor drive unit (9) and at least one gear unit, wherein the drive unit (9) and/or the gear unit is connected to a further component, in particular to a further gear unit, by means of a shaft (3),
**characterized in that**
a protective ring (1) for protecting a connecting region (2) between the shaft (3) and a housing component (4) of the drive unit (9) and/or the gear unit against thread lap or contamination is arranged on the shaft (3) in a twist-free manner, wherein the protective ring (1) comprises a cylindrical base body (5), for the rotationally fixed arrangement of the protective ring (1) on the shaft (3), and a conical end portion (6), adjacent to the cylindrical base body (5), for covering the connecting region (2) and for guiding dirt particles and threads away from the connecting region (2), wherein the housing component (4) has a flat surface in the region of the shaft (3) or a region provided for connection to the shaft (3) and/or a receptacle of the shaft (3), against which surface the conical end portion (6) of the protective ring is arranged in an abutting and sliding manner.

2. Drive device for a spinning machine according to claim 1, **characterized in that** the cylindrical base body (5) of the protective ring (1) is fixed on the shaft (3) in a twist-free manner by means of a press fit, for which purpose the cylindrical base body (5) has an inner diameter which is constant over its entire length and which is smaller than the outer diameter of the shaft (3).

3. Drive device for a spinning machine according to claim 1 or 2, **characterized in that** the conical end portion (6) at the outer end of the protective ring (1) has a contact surface (7) which is arranged at a right angle to the central longitudinal axis (M) of the cylindrical base body (5), wherein the protective ring (1) is arranged so as to slide along the housing component (4) and at the same time cover the connecting region (2).

4. Drive device for a spinning machine according to at least one of the preceding claims, **characterized in that** the length of the conical end portion (6) is between 3% and 20% of the length of the protective ring (1).

5. Drive device for a spinning machine according to at least one of the preceding claims, **characterized in that** the conical end portion (6) has a conical outer surface (8) with a smooth, straight and/or angled surface relative to a central longitudinal axis of the protective ring (1) in order to guide a thread in the connecting region (2) away from the housing component (4).

6. Drive device for a spinning machine according to at least one of the preceding claims, **characterized in that** the angle of the conical end portion (6) and in particular of the conical outer surface (8) to the central longitudinal axis (M) of the cylindrical base body (5) is between 45° and 65°.

7. Drive device for a spinning machine according to at least one of the preceding claims, **characterized in that** the maximum outer diameter of the conical end portion (6) is between 20% and 50% larger than the outer diameter of the cylindrical base body (5).

8. Drive device for a spinning machine according to at least one of the preceding claims, **characterized in that** the cylindrical base body (5) and preferably the entire protective ring (1) is formed in one piece and rotationally symmetrically.

9. Drive device for a spinning machine according to at least one of the preceding claims, **characterized in that** the wall thickness of the protective ring (1) is constant at least in the region of the cylindrical base body (5) and is between 1 mm and 3 mm.

## Revendications

1. Dispositif d'entraînement pour un métier à filer, comportant une unité d'entraînement (9) motorisée et au moins une unité de transmission, l'unité d'entraînement (9) et/ou l'unité de transmission étant reliées à un autre composant, en particulier à une autre unité de transmission, à l'aide d'un arbre (3),
**caractérisé en ce**
**qu**'une bague de protection (1) destinée à protéger une zone de liaison (2) entre l'arbre (3) et un composant de boîtier (4) de l'unité d'entraînement (9) et/ou de l'unité de transmission contre l'enroulement de fil ou l'encrassement est disposée sur l'arbre (3) de manière solidaire en rotation, la bague de protection (1) comprenant un corps de base cylindrique (5) destiné à disposer la bague de protection (1) sur l'arbre (3) de manière à ce qu'il ne puisse pas tourner et une partie d'extrémité conique (6) adjacente au corps de base cylindrique (5) destinée à recouvrir la zone de liaison (2) et à guider les particules de saleté et les fils hors de la zone de liaison (2), le composant de boîtier (4) présentant, dans la zone de l'arbre (3) ou, selon le cas, dans une zone prévue pour la liaison avec l'arbre (3) et/ou d'un logement de l'arbre (3), une surface plane sur laquelle la section d'extrémité conique (6) de la bague de protection est disposée en appui et en entraînement par friction avec celle-ci.

2. Dispositif d'entraînement pour un métier à filer selon la revendication 1, **caractérisé en ce que** le corps de base cylindrique (5) de la bague de protection (1) est prévu pour être fixé de manière solidaire en rotation sur l'arbre (3) par un ajustement serré, ce pourquoi le corps de base cylindrique (5) présente un diamètre intérieur constant sur toute sa longueur, qui est plus petit que le diamètre extérieur de l'arbre (3).

3. Dispositif d'entraînement pour un métier à filer selon la revendication 1 ou 2, **caractérisé en ce que** la section d'extrémité conique (6) présente, au niveau de l'extrémité extérieure de la bague de protection (1), une surface d'appui (7) qui est disposée perpendiculairement à l'axe longitudinal central (M) du corps de base cylindrique (5), la bague de protection (1) étant disposée sur le composant de boîtier (4) en entraînement par friction avec celui-ci et tout en recouvrant en même temps la zone de liaison (2).

4. Dispositif d'entraînement pour un métier à filer selon au moins l'une des revendications précédentes, **caractérisé en ce que** la longueur de la section d'extrémité conique (6) représente entre 3 % et 20 % de la longueur de la bague de protection (1).

5. Dispositif d'entraînement pour un métier à filer selon au moins l'une des revendications précédentes, **caractérisé en ce que** la section d'extrémité conique (6) présente une surface extérieure conique (8) pourvue d'une surface lisse, droite et/ou inclinée par rapport à un axe longitudinal central de la bague de protection (1), afin d'éloigner un fil dans la zone de liaison (2) de l'élément de boîtier (4).

6. Dispositif d'entraînement pour un métier à filer selon au moins l'une des revendications précédentes, **caractérisé en ce que** l'angle de la section d'extrémité conique (6) et en particulier de la surface extérieure conique (8) par rapport à l'axe longitudinal central (M) du corps de base cylindrique (5) est situé entre 45° et 65°.

7. Dispositif d'entraînement pour un métier à filer selon au moins l'une des revendications précédentes, **caractérisé en ce que** le diamètre extérieur maximal de la section d'extrémité conique (6) est entre 20 % et 50 % plus grand que le diamètre extérieur du corps de base cylindrique (5).

8. Dispositif d'entraînement pour un métier à filer selon au moins l'une des revendications précédentes, **caractérisé en ce que** le corps de base cylindrique (5) et de préférence l'ensemble de la bague de protection (1) sont formés d'une seule pièce et à symétrie de révolution.

9. Dispositif d'entraînement pour un métier à filer selon au moins l'une des revendications précédentes, **caractérisé en ce que** l'épaisseur de paroi de la bague de protection (1) est constante au moins dans la zone du corps de base cylindrique (5) et est située entre 1 mm et 3 mm.
